# EUROPÄISCHE PATENTANMELDUNG

(11) **EP 0 812 805 A2**
(43) Veröffentlichungstag der Anmeldung: **17.12.1997**
(21) Anmeldenummer: 97108368.8
(22) Anmeldetag: 23.05.1997
(51) Int. Cl.: C02F 1/44, B01D 61/04, B01D 65/08, C02F 5/00

(54) **Verfahren und Vorrichtung zur Aufbereitung von Kaltwasser**

(30) Priorität: 15.06.1996 DE 19623999
(71) Anmelder: Letzner, Hans-Hermann, 42399 Wuppertal (DE)
(72) Erfinder: Letzner, Hans-Hermann, 42399 Wuppertal (DE)
(74) Vertreter: Eichler, Peter, Dipl.-Ing.

(57) **Zusammenfassung**

Die vorliegende Erfindung betrifft eine Wasseraufbereitungsanlage (1) für Kaltwasser aus einem Wasserversorgungsnetz (2), bei welcher die Entkalkung des Speisewassers an einer semipermeablen Membran (7) erfolgt, die während Stillstandszeiten des Speisewasserstroms mit zusätzlichem Speisewasser gelöstem CO₂ beaufschlagt wird.

## Beschreibung

Die vorliegende Erfindung betrifft ein Verfahren zur Aufbereitung von Kaltwasser nach Oberbegriff von Anspruch 1.

Derartiges Verfahren ist zum Beispiel bekannt aus Prospekt Letzner, Pharmawasseraufbereitung.

Die dort gezeigten Anlagen sind geeignet zur Aufbereitung von Kaltwasser für den Hausgebrauch, für die Verwendung in der Fruchtsaftindustrie, in Brauereien sowie in der Pharmazie.

Es ist daher keine Beschränkung der vorliegenden Erfindung auf das Anwendungsgebiet der Pharmawasseraufbereitung beabsichtigt. Bei diesem bekannten Verfahren wird Kaltwasser aus einem Wasserversorgungsnetz entnommen und entkalkt. Die Entnahme geschieht intervallweise, weil bei der bekannten Wasseraufbereitungsanlage ein Nutzwassertank vorgesehen ist, aus dem nicht kontinuierlich das Nutzwasser entnommen wird. Daher wird üblicherweise bei gefülltem Nutzwassertank die Wasseraufbereitung gestoppt. Sofern das Niveau im Nutzwassertank unter einen vorgegebenen Wert gefallen ist, wird die Anlage erneut in Betrieb genommen, um erneut Nutzwasser herzustellen.

Der Zweck derartiger Anlagen liegt darin, Wasser aus dem öffentlichen Wassernetz, im folgenden auch als Speisewasser bezeichnet, zu Nutzwasser mit vorbestimmter Qualität, insbesondere mit vorbestimmtem PH-Wert und vorbestimmter elektrischer Leitfähigkeit aufzubereiten.

Üblicherweise muß das Speisewasser hierzu entkalkt werden um die nachgeordnete semipermeable Membran vor Beeinträchtigungen zu schützen. Hierzu sind verschiedene Verfahren bekannt. Die Entkalkung kann beispielsweise über Ionenaustauscherharze erfolgen. Die hierfür erforderliche große Austauscherfläche begünstigt allerdings die unerwünschte Bildung von Mikroorganismen und schafft insbesondere die Voraussetzung für Totwasserzonen, in denen sich derartige Mikroorganismen zusätzlich ansiedeln können.

Ein weiteres Verfahren zur Entkalkung besteht darin, das Calziumcarbonat im Speisewasser in Lösung zu halten, so daß es nicht aus dem Speisewasser ausfallen kann. Dies geschieht z.B. durch Zugabe geringfügiger Mengen von hierfür geeigneten Säuren (HCL, H2SO4, Zitronensäure).

Ferner ist es aus der EP 0 102 401 bekannt, bei Warmwasseranlagen zur elektrolytischen Aufbereitung von Warmwasser CO₂ hinzu zu dosieren, um Kalkablagerungen im Rohrsystem aufzulösen.

Die Übertragung dieses Verfahrens auf das vorliegende Problem ist allerdings nicht möglich, weil das zugesetzte CO₂ durch die semipermeable Membran hindurchgeht, wodurch der vorgegebene PH-Wert abgesenkt und der Leitwert erhöht wird. Dies will man unter allen Umständen vermeiden.

Andererseits sind die herkömmlich verwendeten vorgeschalteten Enthärtungsanlagen relativ wartungsintensiv und teuer.

Zwar könnte man in Erwägung ziehen, die Entkalkung auch mittels der semipermeablen Membran durchzuführen. Dann jedoch würde eine Kalkanreicherung auf der Speisewasserseite der semipermeablen Membran zu einem Kristallwachstum führen, welches letztlich die Kapillaren der semipermeablen Membran verschließt, so daß die Nutzwasserausbeute deutlich verringert wird.

Es ist deshalb Aufgabe der vorliegenden Erfindung, das bekannte Verfahren zur Aufbereitung von Kaltwasser aus einem Wasserversorgungsnetz so zu verbessern, daß unter Vermeidung zusätzlich vorgeschalteter Enthärtungsanlagen und ohne weitere Druckerhöhung die Nutzwasserausbeute praktisch zeitunabhängig erhöht wird.

Diese Aufgabe löst die Erfindung mit den Merkmalen des Anspruchs 1.

Aus den Merkmalen der Ansprüche 8,10 und 11 ergeben sich bevorzugte Vorrichtungen zur Durchführung des jeweiligen Verfahrens.

Aus der Erfindung ergibt sich der Vorteil, daß das zusätzlich angereicherte CO₂ nicht nur den unerwünschten Kalk in Lösung hält, sondern zusätzlich auch noch das Wachstum von Mikroorganismen auf der Speisewasserseite der semipermeablen Membran deutlich verringert.

Da es sich bei dem vorliegenden Ausgangsprodukt um Kaltwasser handelt, kann bereits ein hoher CO₂-Anteil im Wasser gelöst sein.

Hinzu kommt jedoch noch die Tatsache, daß CO₂ unter erhöhtem Vorlaufdruck von zwei bar und darüber zugeführt wird, wodurch die Sättigungslöslichkeitsgrenze von CO₂ im Speisewasser zusätzlich angehoben wird.

Da die Sättigungslöslichkeitsgrenze die maximalen Anteile an CO₂ im Speisewasser vorschreibt, wird also durch die Kombination aus Kaltwasser und dem erhöhten Vorlaufdruck eine so große Menge an CO₂ im Speisewasser in Lösung gehalten, daß hierdurch wirksam die unerwünschten Calziumcarbonat-Bestandteile aufgelöst werden können.

Die hierfür benötigte Zeit ist relativ kurz, weil die hohe Konzentration des CO₂ für einen relativ schnellen Reaktionsablauf sorgt.

Dabei ist berücksichtigt, daß die Tendenz der Calziumcarbonat-Moleküle zum Kristallwachstum zeitabhängig steigt. Diese Tendenz kann jedoch ohne weiteres in Kauf genommen werden, weil die Anreicherung mit CO₂ bei Stillstand der Anlage erfolgt, so daß prinzipiell keine Probleme mit dem Leitwert und dem PH-Wert des Nutzwassers auftreten.

Die Erfindung beruht daher auf einer gelungenen Kombination an sich bekannter Verfahrensmerkmale zu einem neuen rationell und gerätetechnisch vereinfachten Verfahrensablauf. Dieser Vorteil wird durch den Wegfall der bisherigen Entkalkungseinrichtung im Vorlauf erzielt. Damit kommt allerdings der semipermeablen Membran nunmehr auch die zusätzliche Funktion zu, die Entkalkung des Speisewassers herbeizuführen.

Damit wird die semipermeable Membran einer Doppelfunktion unterworfen, weil auch die Calziumcarbonat-Kristalle an der semipermeablen Membran abgeschieden werden. Die bisherige Funktion der semipermeablen Membran, die in einer osmotischen Reinigung des Speisewassers bestand, bleibt von der zusätzlichen neuen Funktion unabhängig.

Ein wesentlicher Aspekt der Erfindung liegt auch darin, daß das CO₂ nicht gasförmig sondern aufgrund des hohen Drucks in der Wasseraufbereitungsanlage in gelöster Form vorliegt. Da die Löslichkeit mit steigendem Druck anwächst, und zusätzlich mit sinkender Temperatur ebenfalls, tritt hier ein doppelter Anreicherungseffekt ein, der sich vorteilhaft auf die Reaktionsgeschwindigkeit zur Auflösung der Calziumcarbonat-Kristalle auswirkt.

Zusätzlich kann vorgesehen sein, die Speisewasserseite der semipermeablen Membran vor der CO₂ Anreicherung zu Spülen, um das eingedickte Calziumcarbonat im Bereich der semipermeablen Membran bereits anzulösen und herauszuspülen, bevor die verbleibenden Reste dann durch das überschüssige CO₂ im Speisewasser aufgelöst werden.

Vorzugsweise liegt der Speisewasserdruck während des Spülvorgangs oberhalb von zwei bar, vorzugsweise zwischen vier bar und acht bar. Während des Spülvorgangs wird dem Speisewasser dann die erforderliche Menge an CO₂ zugegeben. Während des Spülvorgangs wird also ein CO₂ angereicherter Speisewasserstrom an der semipermeablen Membran vorbeigeführt. Der fließende Strom kommt dann durch geeignet angeordnete und geschaltete Ventile unter Druck zum Stillstand. Damit muß die Anreicherungsmenge CO₂ lediglich noch geringe Mengen des eingedickten Calziumcarbonat aus der kristallinen Form in die gelöste Form umsetzen.

Zusätzlich kann es Vorteile bringen, wenn die semipermeable Membran auch von der Nutzwasserseite her kommend mit CO₂ beaufschlagt wird. Dieser Weiterbildung der Erfindung liegt die Überlegung zugrunde, daß beim Vorbeiströmen des Speisewassers während des Spülvorgangs auf der Speisewasserseite der Membran ein vom Membranabstand abhängiges Geschwindigkeitsgefälle besteht, welches der Strömung dort die geringste Geschwindigkeit aufprägt, wo die höchsten Konzentrationen an Calziumcarbonat vorliegen, nämlich unmittelbar auf der Oberfläche der semipermeablen Membran.

Folglich ist die Umsetzungsgeschwindigkeit, mit welcher die Calziumcarbonat-Kristalle gelöst werden, dort am geringsten, wo die höchste Calziumcarbonatkonzentration gemessen wird.

Um diesem Nachteil zu begegnen, dient die oben beschriebene Maßnahme, wonach zusätzliches CO₂ in Lösung von der Gegenseite der semipermeablen Membran in die hoch angereicherte Calziumcarbonatschicht zugeführt wird.

Damit wird das CO₂ dorthin gebracht, wo es am dringensten benötigt wird, so daß die Geschwindigkeit zur Auflösung der Calziumcarbonat-Kristalle im Bereich der höheren Calziumcarbonatkonzentrationen beschleunigt wird.

Ein weiterer Aspekt der Erfindung besteht darin, daß nach dem Wiederanlaufen des Verfahrens am Ende jeder Stillstandsperiode zunächst ein qualitätsgesteuerter Nutzwasserverwurf erfolgt, solange bis das Nutzwasser keine CO₂-Anteile mehr enthält, so daß die beabsichtigten PH- und Leitwerte problemlos sichergestellt sind.

Aus den weiteren Unteransprüchen ergeben sich vorteilhafte Ausführungsformen für Vorrichtungen, mit denen die Erfindung realisiert werden kann.

Im folgenden wird die Erfindung anhand von Ausführungsbeispielen näher erläutert. Es zeigen:
- Fig.1: ein erstes Ausführungsbeispiel für eine Wasseraufbereitungsanlage nach dieser Erfindung, und
- Fig.2: eine detaillierte Vergrößerung der semipermeablen Membran.

Sofern im folgenden nichts anderes gesagt ist, gilt die folgende Beschreibung stets für alle Figuren.

Die Figuren zeigen eine Wasseraufbereitungsanlage 1, mit welcher das Verfahren nach dieser Erfindung durchgeführt werden kann.

Eine derartige Wasseraufbereitungsanlage 1 besitzt einen Anschluß an ein Wasserversorgungsnetz 2, aus dem Wasserversorgungsnetz 2 strömt sogenanntes Speisewasser über die Speisewasserleitung 3 in einen vorgeschalteten Filter 4. Danach wird das vorgefilterte Speisewasser über die Druckerhöhungseinrichtung 5 einer Trennkammer 6 zugeführt. Die Trennkammer 6 weist eine semipermeable Membran 7 auf, welche das ankommende Speisewasser in Nutzwasser und Abwasser trennt.

Zu diesem Zweck ist jenseits der semipermeablen Membran 7 eine Nutzwasserleitung 9 vorgesehen, die in den Nutzwassertank 10 mündet.

Diesseits der semipermeablen Membran 7 ist eine Abwasserleitung 8 vorgesehen, die bedarfsweise geöffnet oder geschlossen werden kann.

Hinter dem Nutzwassertank 10 kann über eine weitere Druckerhöhungseinrichtung der Verbraucher 11 mit dem Nutzwasser versorgt werden.

Wesentlich ist nun, daß an der Zuleitung zur Trennkammer 6 eine CO₂ Versorgungsleitung 13 angeschlossen ist, die eine CO₂-Quelle 12 über das Dosierventil 14 mit der Speisewasserleitung 3 verbindet.

Die CO₂-Quelle 12 sitzt also auf der Speisewasserseite der Wasseraufbereitungsanlage 1.

Ferner ist in der Nutzwasserleitung 9 zum Nutzwassertank 10 ein Sperrventil 15 angeordnet, mit dessen Hilfe die Nutzwasserleitung gegenüber dem Nutzwassertank 10 geöffnet oder geschlossen werden kann.

Die Abwasserleitung 8 ist mit einem Stauventil 16 versehen und kann über dieses Stauventil 16 ebenfalls geöffnet oder geschlossen werden.

Um mit der gezeigten Anlage die Entkalkung des zugeführten Speisewassers an der semipermeablen Membran 7 durchführen zu können, muß die semipermeable Membran 7 intervallweise vom sich dort absetzenden Kalk des Speisewassers befreit werden. Dies geschieht dadurch, daß während der Zeiten von Durchflußstillständen das Speisewasser unter dem erhöhten Vorlaufdruck der Druckerhöhungseinrichtung 5 mit CO₂ angereichert ist. Auf diese Weise wird die speisewasserseitige Oberfläche der semipermeablen Membran 7 von den dort befindlichen Kalkablagerungen befreit.

Dies geschieht z.B. dadurch, daß bei geschlossenem Sperrventil 15 der Nutzwasserstrom in den Nutzwassertank 10 unterbrochen ist, und daß das Stauventil 16 sowie das Dosierventil 14 währenddessen so gesteuert werden, daß die Wasseraufbereitungsanlage 1 unter dem Vorlaufdruck mit dem bereits zugeführten und gelösten CO₂ zum Stillstand kommt.

Es muß daher das Stauventil 16 bei zunächst geöffnetem Dosierventil 14 zugedreht werden, so daß die in das Speisewasser eingeführte CO₂-Menge in das gesamte Leitungssystem bis einschließlich zur Trennkammer 6 einströmen kann.

Es wird also mit zunehmender Zeit das Stauventil 16 zugedreht und anschließend das Dosierventil 14, so daß eine ausreichende Anreicherung von CO₂ im Speisewassersystem vorliegt, insbesondere dort, wo die Calziumcarbonat-Kristalle sich auf der semipermeablen Membran 7 ablegen wollen.

Es kommt daher auf eine koordinierte Steuerung von Stauventil 16 und Dosierventil 14 an, derart, daß das einströmende Speisewasser mit dem darin bereits gelösten CO₂ hinreichend weit bis zur Trennkammer 6 strömen kann.

Um darüber hinaus ein Zurückströmen des mit CO₂ angereicherten Speisewassers in das Wasserversorgungsnetz 2 zu vermeiden, ist das Wasserversorgungsnetz vor dem Anschluß der CO₂-Versorgungsleitung 13 mit einem in Richtung zum Wasserversorgungsnetz schließenden Rückschlagventil 17 versehen.

Ein weiteres Merkmal des gezeigten Ausführungsbeispiels ist die CO₂-Rückströmleitung 18, welche vor dem Sperrventil 15 in der Nutzwasserleitung 9 angebracht ist. Die CO₂-Rückströmleitung 18 wird über das Gegenspülventil 19 mit der nutzwasserseitigen CO₂-Quelle 20 verbunden. Der Druck der nutzwasserseitigen CO₂-Quelle 20 ist dabei etwas höher als der sich einstellende Druck, wenn der fließende Speisewasserstrom auf der Speisewasserseite der semipermeablen Membran 7 zum Stillstand kommt.

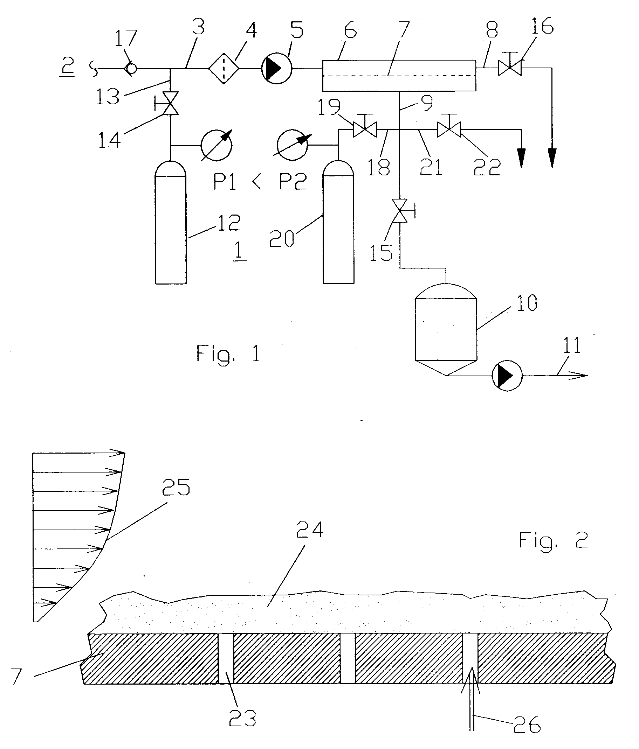

Auf diese Weise kann die semipermeable Membran von beiden Seiten mit CO₂ in Lösung beauschlagt werden, so daß die Kapillaren 23 der semipermeablen Membran 7 (siehe Fig. 2) von einem CO₂-Rückstrom 26 durchströmt werden. Der CO₂-Rückstrom 26 trifft auf die Calziumcarbonatansammlung 24, die sich auf der Speisewasserseite 24 der semipermeablen Membran 7 angereichert hat. Der rückwärts zugeführte und mit CO₂ angereicherte Strom sorgt daher für eine gute Verteilung des CO₂ über die Höhe der Carbonatansammlung 24. Die beidseitige Beaufschlagung der Carbonatansammlung 24 mit CO₂ unterstützt also die CO₂-Zufuhr, die sich aus dem Geschwindigkeitsprofil 25 des ankommenden Speisewasserstroms mit CO₂ in Lösung ergibt. Naturgemäß ist das Geschwindigkeitsprofil derart, daß die Strömungsgeschwindigkeit unmittelbar auf der Oberfläche der semipermeablen Membran am geringsten ist. Um dennoch hier ausreichende Mengen an gelöstem CO₂ in die Carbonatansammlung 24 zu bringen, dient die CO₂-Rückströmleitung 18, die über das Gegenspülventil 19 auf und zu gesteuert wird.

Durch die Gegenspülrichtung des CO₂ von der Nutzwasserseite der semipermeablen Membran 7 her wird die CO₂-Zufuhr praktisch auch unabhängig von der Ablagerung evtl. Partikel auf den Zutrittsöffnungen zu den Kapillaren 23.

Da ferner der CO₂-Druck in der Rückströmleitung 18 oberhalb des Anlagendrucks auf der Speisewasserseite der semipermeablen Membran 7 liegen muß, wird zusätzlich vorgeschlagen, den Rückströmdruck in der zum Durchdringen der Kapillaren 23 erforderlichen Höhe anzusetzen und den Speisewasserdruck dafür entsprechend niedriger, z.B. so, daß die Anlage unter einem Druck von etwa zwei bar zum Stillstand kommt.

Da auf diese Weise allerdings eine Anreicherung des Nutzwassers mit CO₂ zwingend erfolgt, was jedoch unerwünscht ist, wird zusätzlich vorgeschlagen, vor dem Nutzwassertank 10 an der Nutzwasserleitung eine Bypassleitung 21 vorzusehen, welche über ein Bypassventil 22 auf- und zugesteuert werden kann. Auf diese Weise wird sichergestellt, daß beim Anfahren der Wasseraufbereitungsanlage 1 nach jeweils einer Stillstandsperiode ein qualitätsgesteuerter Verwurf des zunächst entstehenden Nutzwassers erfolgt, solange bis das Nutzwasser wieder die vorgeschriebene Zusammensetzung hat.

Erst danach wird das Bypassventil 22 geschlossen, der Verwurf des Nutzwassers gestoppt und das Sperrventil 15 geöffnet, so daß der Nutzwassertank 10 wieder gefüllt werden kann.

### Bezugszeichenliste:

- 1: Wasseraufbereitungsanlage
- 2: Wasserversorgungsnetz
- 3: Speisewasserleitung
- 4: Filter
- 5: Druckerhöhungseinrichtung
- 6: Trennkammer
- 7: semipermeable Membran
- 8: Abwasserleitung
- 9: Nutzwasserleitung
- 10: Nutzwassertank
- 11: Verbraucher
- 12: CO₂-Quelle, Speisewasserseite
- 13: CO₂-Versorgungsleitung
- 14: Dosierventil
- 15: Sperrventil
- 16: Stauventil
- 17: Rückschlagventil
- 18: CO₂-Rückströmleitung
- 19: Gegenspülventil
- 20: CO₂-Quelle, Nutzwasserseite
- 21: Bypassleitung
- 22: Bypassventil
- 23: Kapillare
- 24: Calziumcarbonatansammlung
- 25: Geschwindigkeitsprofil
- 26: CO₂-Rückstrom

## Patentansprüche

1. Verfahren zum Aufbereiten von Kaltwasser mit Trinkwasserqualität (=Speisewasser) welches intervallweise aus einem Wasserversorgungsnetz (2) entnommen und entkalkt wird, sowie durch Umkehrosmose mittels semipermeabler Membran (7) unter erhöhtem Vorlaufdruck in entkalktes Nutzwasser und in kalkangereichertes Abwasser getrennt wird, **dadurch gekennzeichnet,** daß die Entkalkung an der semipermeablen Membran (7) erfolgt, und daß zur Kalkbefreiung der speisewasserseitigen Oberflächen der semipermeablen Membran (7) das Speisewasser unter dem erhöhten Vorlaufdruck und während der Zeiten von Durchflußstillständen mit CO₂ angereichert ist.

2. Verfahren nach Anspruch 1, **dadurch gekennzeichnet,** daß vor der CO₂-Anreicherung des Speisewassers die Speisewasserseite der semipermeablen Membran (7) mit Speisewasser gespült wird.

3. Verfahren nach Anspruch 2, **dadurch gekennzeichnet,** daß der Speisewasserdruck während des Spülvorgangs oberhalb von zwei bar liegt.

4. Verfahren nach Anspruch 3, **dadurch gekennzeichnet,** daß der Speisewasserdruck während des Spülvorgangs zwischen vier bar und acht bar liegt.

5. Verfahren nach einem der Ansprüche 2 bis 4, **dadurch gekennzeichnet,** daß während des Spülvorgangs dem Speisewasser CO₂ zugegeben wird.

6. Verfahren nach einem der Ansprüche 1 bis 5, **dadurch gekennzeichnet,** daß die semipermeable Membran (7) unmittelbar vor den und/oder während der Zeiten der Durchflußstillstände von der Nutzwasserseite kommend mit CO₂ von höherem Druck als dem Vorlaufdruck beaufschlagt wird.

7. Verfahren nach einem der Ansprüche 1 bis 6, **dadurch gekennzeichnet,** daß nach Beenden jeweils einer Periode des Durchflußstillstands das Nutzwasser solange verworfen wird, bis kein angereichertes CO₂ mehr vorliegt.

8. Vorrichtung zur Durchführung des Verfahrens nach einem der Ansprüche 1 bis 5, mit einem Anschluß an ein Wasserversorgungsnetz (2), einem nachgeordneten Filter (4) mit nachgeordneter Trennkammer (6) welche von einer semipermeablen Membran (7) in eine Speisewasserseite und eine Nutzwasserseite getrennt wird, wobei im Vorlauf vor der Trennkammer (6) eine Druckerhöhungseinrichtung (5) angeordnet ist und wobei auf der Nutzwasserseite ein Nutzwassertank (10) vorgesehen ist, **dadurch gekennzeichnet,** daß
8.1 an der Zuleitung (3) zur Trennkammer (6) eine CO₂-Versorgungsleitung (13) über ein Dosierventil (14) angeschlossen ist,
8.2 in der Nutzwasserleitung (9) zum Nutzwassertank (10) ein Sperrventil (15) sitzt,
8.3 in der Abwasserleitung (8) ein Stauventil (16) vorgesehen ist,
8.4 bei geschlossenem Sperrventil (15) das Dosierventil (14) und das Stauventil (16) so steuerbar sind, daß die Anlagen unter dem Vorlaufdruck mit zugeführtem CO₂ zum Stillstand kommt.

9. Vorrichtung nach Anspruch 8, **dadurch gekennzeichnet,** daß das Wasserversorgungsnetz (2) vor dem Anschluß der CO₂-Versorgungsleitung (13) über ein Rückschlagventil (17) verfügt.

10. Vorrichtung nach Anspruch 8 oder 9 zur Durchführung des Verfahrens nach Anspruch 6, **dadurch gekennzeichnet,** daß vor dem Sperrventil (15) in der Nutzwasserleitung (9) eine CO₂-Rückstromleitung (18) angeschlossen ist, über welche die Nutzwasserseite der semipermeablen Membran (7) mit zusätzlichem CO₂ beaufschlagbar ist.

11. Vorrichtung nach Anspruch 8,9 oder 10 zur Durchführung des Verfahrens nach Anspruch 7, **dadurch gekennzeichnet,** daß vor dem Nutzwassertank (10) an der Nutzwasserleitung (9) eine Bypassleitung (21) mit Bypassventil (22) vorgesehen ist, welches bei Anfahren der Anlage (1) nach einer Stillstandsperiode zum qualitätsgesteuerten Verwurf des CO₂ angereicherten Nutzwasser geöffnet ist.
